# EUROPÄISCHE PATENTSCHRIFT

(11) **EP 1 532 383 B1**
(45) Veröffentlichungstag und Bekanntmachung des Hinweises auf die Patenterteilung: **23.08.2006**
(21) Anmeldenummer: 03794931.0
(22) Anmeldetag: 23.08.2003
(51) Int. Cl.: F16H 3/091

(54) **GETRIEBE MIT DIREKTEM GANG**
TRANSMISSION HAVING A DIRECT GEAR
BOITE DE VITESSES A PRISE DIRECTE

(30) Priorität: 28.08.2002 DE 10239396
(43) Veröffentlichungstag der Anmeldung: 25.05.2005
(73) Patentinhaber: ZF FRIEDRICHSHAFEN Aktiengesellschaft, 88038 Friedrichshafen (DE)
(72) Erfinder: HEINZELMANN, Karl-Fritz, 88074 Meckenbeuren (DE)
(86) Internationale Anmeldenummer: PCT/EP2003/009373
(87) Internationale Veröffentlichungsnummer: WO 2004/025140

(56) Entgegenhaltungen:
- DE-A- 4 226 575
- DE-A- 10 051 354
- DE-A- 10 063 847
- GB-A- 2 175 361
- US-A- 5 881 600

## Beschreibung

Die vorliegende Erfindung betrifft ein Getriebe für ein Kraftfahrzeug, gemäß dem Oberbegriff des Patentanspruchs 1.

Nach dem Stand der Technik werden, um den Kraftstoffverbrauch zu minimieren, Antriebsstränge für Kraftfahrzeuge häufig so ausgelegt, dass die Hauptfahranteile im direkten Getriebegang gefahren werden. Im direkten Getriebegang erfolgt der Kraftfluss durch eine direkte Koppelung der Antriebswelle mit der Abtriebswelle, was in einer Erhöhung des Wirkungsgrads resultiert. In Gegensatz dazu entstehen in den weiteren, nicht direkten Gängen zusätzliche Verluste, beispielsweise durch die Zahneingriffe unter Last, die dynamische Wälzlager-Belastung und die Pumpenleistung.

Bei den Getrieben nach dem Stand der Technik sind im direkten Gang die für die anderen Gänge erforderlichen leistungsführenden Teile nicht vollständig abgekoppelt, wie es beispielsweise bei dem Getriebe im Rahmen der DE 198 31 293 A1 der Anmelderin der Fall ist. Dadurch, dass beispielsweise die Vorgelegewellen über jeweils eine Antriebskonstante angetrieben werden, drehen sich Wellen, Räder, Lager, Synchronteile etc. mit der durch die Antriebskonstante vorgegebenen Drehzahl mit, obwohl diese Teile nicht an der Leistungsübertragung beteiligt sind.

Durch die daraus resultierende Reibung, die auch im nicht belasteten Zustand entsteht, wird der Wirkungsgrad des Getriebes verschlechtert. Diese Reibung kann beispielsweise durch Panschverluste durch das Eintauchen der Zahnräder in den Ölsumpf oder durch Reibungsverluste an den Synchronisierungen und an den Lagern entstehen.

Die DE 41 17 642 A1 beschreibt ein Mehrwellengetriebe mit mehreren Gängen, bei dem mindestens ein Gang von einem Zahnradsatz gebildet wird, wobei die Zahnräder des Zahnradsatzes auf entsprechenden Wellen drehbar gelagert und kontinuierlich in Eingriff sind und wobei jede Welle eine Kupplung bzw. Synchronisiereinrichtung aufweist, um mittels der Kupplung den Drehmomentübertragungsweg zu vervollständigen bzw. zu unterbrechen. Dadurch können die Zahnräder des Zahnradsatzes von An- und Abtrieb isoliert werden, so dass die Gesamtträgheitsmasse der umlaufenden Getriebeteile reduziert wird. Diese Konstruktion weist den Nachteil auf, dass durch die Verwendung von zwei Synchronisiereinrichtungen für einen Zahnradsatz die Herstellungs- und Wartungskosten negativ beeinflusst werden.

Aus der gattungsbildenden DE 100 51 354 A1 ist an Getriebe für ein Kraftfahrzeug mit einer nachgeschalteten Bereichsgruppe bekannt, das eine Antriebswelle und eine Abtriebswelle umfaßt, die in eine direkte Verbindung mit einander geschaltet werden können.

Der vorliegenden Erfindung liegt die Aufgabe zugrunde, ein Getriebe mit einer Antriebswelle, einer Abtriebswelle und mindestens einer Vorgelegewelle anzugeben, welches die Nachteile des Standes der Technik vermeidet und im Direktgang einen optimierten Wirkungsgrad aufweist.

Diese Aufgabe wird durch die Merkmale des Patentanspruchs 1 gelöst. Weitere Ausgestaltungen und Vorteile gehen aus den Unteransprüchen hervor.

Demnach wird ein Getriebe für ein Kraftfahrzeug vorgeschlagen, gemäß dem Anspruch 1.

Eine besonders vorteilhafte Ausführungsform der vorliegenden Erfindung sieht vor, dass sich im direkten Gang nur die Antriebs- und Abtriebswelle und deren interne Verbindungselemente drehen.

Im Rahmen einer weiteren Ausführungsform der vorliegenden Erfindung wird vorgeschlagen, bei Getrieben mit einer Antriebskonstante, die auf der Antriebswelle angeordnete Verzahnung mittels eines Schaltelementes zu- und abschaltbar auszubilden, so dass sich z.B. die Vorgelegewelle nicht mitdreht.

Bei Getrieben mit zwei Antriebskonstanten wird erfindungsgemäß die Schaltmuffe zwischen den Antriebskonstanten auf "neutral" geschaltet.

Eine weitere Variante der erfindungsgemäßen Konzeption sieht vor, dass die Antriebs- und die Abtriebswelle mittels eines Verbindungselementes direkt verbindbar sind, ohne dass dabei ein Zahnrad als Verbindungselement verwendet wird.

Die Erfindung wird im folgenden beispielhaft anhand der beigefügten Zeichnung näher erläutert. Es stellen dar:
- Fig. 1: ein erstes Ausführungsbeispiel eines Getriebes gemäß der vorliegenden Erfindung, welches eine Vorgelegewelle und eine Antriebskonstante aufweist;
- Fig. 2: ein zweites Ausführungsbeispiel eines Getriebes gemäß der vorliegenden Erfindung, welches eine Vorgelegewelle und zwei Antriebskonstanten aufweist und
- Fig. 3: eine nachgeschaltete Bereichsgruppe gemäß der vorliegenden Erfindung, mit direkter Verbindung von An- und Abtriebwelle.

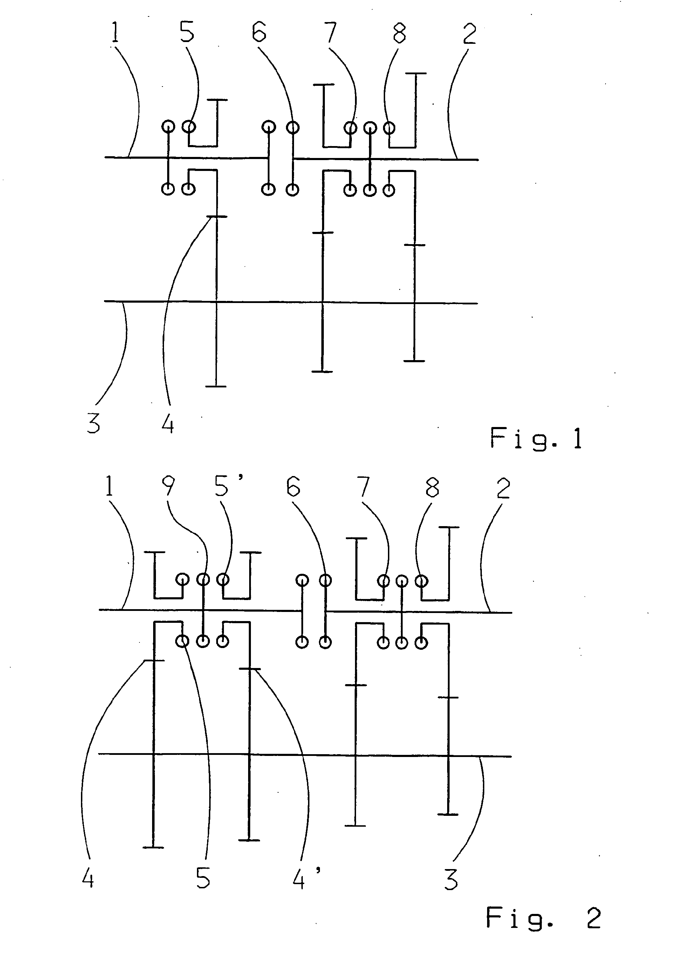

In Fig. 1 ist ein Getriebe mit einer Antriebswelle 1, einer Abtriebswelle 2 und einer Vorgelegewelle 3 dargestellt, welches eine Antriebskonstante 4 aufweist. Gemäß der Erfindung ist die auf der Antriebswelle 1 angeordnete Verzahnung der Antriebskonstanten 4 mittels eines Schaltelementes 5 zu- und abschaltbar ausgebildet, so dass sich im direkten Gang die Vorgelegewelle 3 nicht mitdreht. Zum Schalten des direkten Ganges ist ein weiteres Verbindungs- bzw. Schaltelement 6 vorgesehen, welches die Antriebswelle 1 mit der Abtriebswelle 2 verbindet. Durch diese direkte Verbindung ohne die Notwendigkeit der Verwendung eines Zahnrades werden Reibungsverluste weiter minimiert.

In Fig. 1 sind weitere Schaltelemente 7, 8 gezeigt, welche zum Schalten der indirekten Gänge eingesetzt werden. Im Rahmen des in Fig. 1 gezeigten Ausführungsbeispieles drehen sich im direkten Gang nur die Abtriebswelle 1 und die Abtriebswelle 2, so dass Reibungsverluste weitestgehend vermieden werden.

In Fig. 2 ist ein Getriebe mit einer Vorgelegewelle 3 und zwei Antriebskonstanten 4, 4' gezeigt. Bei derartigen Getrieben wird im direkten Gang die Schaltmuffe 9 zwischen den Antriebskonstanten 4, 4' auf "neutral" geschaltet; die Verzahnungen der Antriebskonstanten 4, 4' sind ebenfalls mittels Schaltelementen 5, 5' zu- und abschaltbar ausgebildet.

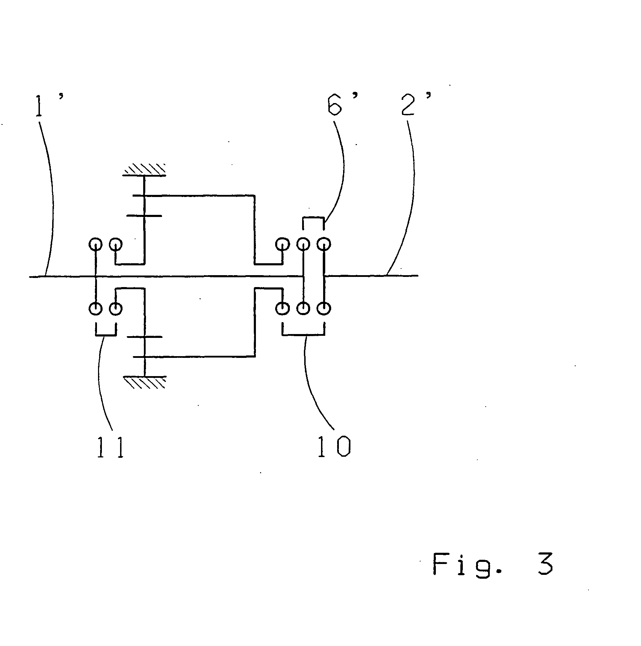

In Fig. 3 ist eine einem Getriebe nachgeschaltete Bereichsgruppe dargestellt. Gemäß der Erfindung wird der Antrieb 1' mit dem Abtrieb 2' der nachgeschalteten Bereichsgruppe über ein Schaltelement 6' direkt verbunden; die übrigen, nicht am Kraftfluss beteiligten Teile werden gemäß der Erfindung abgekoppelt. Für einen indirekten Gang wird das Schaltelement 6' geöffnet und weitere Schaltelemente 10, 11 geschlossen.

### Bezugszeichen

- 1: Antriebswelle
- 1': Antriebswelle der nachgeschalteten Bereichsgruppe
- 2: Abtriebswelle
- 2': Abtriebswelle der nachgeschalteten Bereichsgruppe
- 3: Vorgelegewelle
- 4: Antriebskonstante
- 4': Antriebskonstante
- 5: Schaltelement
- 5': Schaltelement
- 6: Schaltelement
- 6': Schaltelement
- 7: Schaltelement
- 8: Schaltelement
- 9: Schaltmuffe
- 10: Schaltelement
- 11: Schaltelement

## Patentansprüche

1. Getriebe für ein Kraftfahrzeug, umfassend eine Antriebswelle (1), eine Abtriebswelle (2), mindestens eine Vorgelegewelle (3), und eine nachgeschaltet Bereichsgruppe, wobei das Getriebe mindestens einen direkten Gang aufweist, und **dadurch gekennzeichnet, dass** die Antriebswelle (1') der nachgeschalteten Bereichsgruppe mit der Abtriebswelle (2') der nachgeschalteten Bereichsgruppe direkt verbindbar ist und die im direkten Gang nicht am Kraftfluss beteiligten Teile abkoppelbar ausgebildet sind.

2. Getriebe nach Anspruch 1,
**dadurch gekennzeichnet, dass** die Antriebs- und die Abtriebswelle (1', 2') mittels eines Verbindungselementes (6') direkt verbindbar sind.

## Claims

1. The invention relates to a transmission for a motor vehicle comprising an input shaft (1), an output shaft (2), at least one countershaft (3), and a rear-mounted range-change unit, with the transmission featuring at least one direct gear, **characterized in that** the input shaft (1') of the rear-mounted range-change unit can be linked directly to the output shaft (2') of the rear-mounted range-change unit, and that the parts not participating to the force flow in the direct gear can be decoupled.

2. A transmission according to claim 1, **characterized in that** the input shaft and the output shaft (1', 2') can be directly linked to each other by means of a connecting element.

## Revendications

1. Boîte de vitesses pour un véhicule automobile, dotée d'un arbre d'entrée (1), d'un arbre de sortie (2), d'au moins un arbre intermédiaire (3) et d'un groupe-relais monté en aval, sachant que la boîte de vitesses comporte au moins une prise directe, **caractérisée en ce que** l'arbre d'entrée (1') du groupe-relais monté en aval peut être lié directement à l'arbre de sortie (2') du groupe-relais monté en aval et **en ce que** les composants de la prise directe ne coopérant pas à la transmission du couple sont conçus de manière à pouvoir être découplés.

2. Boîte de vitesses selon la revendication 1, **caractérisée en ce que** l'arbre d'entrée et l'arbre de sortie (1', 2') peuvent être directement liés au moyen d'un élément de liaison (6').
